# EUROPEAN PATENT APPLICATION

(11) **EP 4 588 990 A1**
(43) Date of publication of application: **23.07.2025**
(21) Application number: 23877082.0
(22) Date of filing: 14.09.2023
(51) Int. Cl.: C09K 3/22, B01J 13/00, C09K 3/18

(54) **WATER-REPELLING/DUST-REPELLING AGENT, IONIC WAX-BASED EMULSION FOR WATER-REPELLING/DUST-REPELLING AGENT, PRODUCTION METHOD FOR WATER-REPELLING/DUST-REPELLING AGENT, AND METHOD FOR PREVENTING DUST EMISSION AND MOISTURE INCREASE IN OPEN-AIR PILE OF DEPOSITS**

(30) Priority: 13.10.2022 JP 2022164957
(71) Applicant: Kurita Water Industries Ltd., Tokyo 164-0001 (JP)
(72) Inventor: MASUI Yukihito, Tokyo 164-0001 (JP)
(74) Representative: TBK
(86) International application number: PCT/JP2023/033563
(87) International publication number: WO 2024/080076

(57) **Abstract**

The water-repelling/dust-repelling agent according to the present invention includes: an ionic wax-based emulsion containing a wax-based component that is a water-repelling component and is emulsified with an ionic emulsifier; and a resin emulsion containing a dust-proofing component and having a property such that the resin emulsion is capable of being emulsified with the ionic wax-based emulsion.

## Description

### TECHNICAL FIELD

The present invention relates to a water-repelling/dust-proofing agent that can improve water impermeability and prevent water penetration for a long time as compared with a related-art dust-proofing agent, by being added to a dust-proofing agent to be sprayed on an iron-making raw material or a power generation raw material that is piled up in open air at, for example, ironworks or power plants.

### BACKGROUND ART

In ironworks, power plants, pulp and paper factories, and the like, powders such as coal, iron ore, slag, and dust are piled up in open air. The field-piled powders generate dust, which causes an environmental problem. In addition, heavy rains or the like may cause landslides, coal drift (phenomenon in which coal drifts from a field-piled coal due to an increase in moisture content of the coal, which becomes a slurry state), or the like. Furthermore, when rainwater penetrates into the field-piled coal due to rainfall or the like and the moisture content increases, extra energy is consumed for moisture evaporation when the coal is used as a fuel, which leads to a large economic loss and an increase in the amount of CO₂ generated. In the case of raw material coal, the raw material coal has various adverse effects on a coke production step. Therefore, an agent that prevents dust emission and an increase in moisture content of a field-piled deposit can contribute to solving the above problems.

Against such a background, development of an agent that prevents dust emission and an increase in moisture content of a field-piled deposit has been advanced. As a related-art material, a dust-proofing agent includes a vinyl acetate-acrylic copolymer resin and an acrylic acid-ester copolymer resin in which an average particle diameter and a grain size of the polymer particles are adjusted (for example, Patent Document 1). An agent in which a water-repelling agent is mixed into a resin emulsion (dust-proofing agent) includes an agent that uses paraffin wax as the water-repelling agent and contains 3 parts by weight or more and 15 parts by weight or less of the water-repelling agent with respect to 100 parts by weight of the dust-proofing agent (for example, Patent Document 2). However, as problems in these agents for preventing dust emission and an increase in moisture content, an effect of preventing water penetration is weak, and when a field-piled deposit such as coal is exposed to artificial rainfall having a rainfall intensity of 50 mm/h for 5 hours or more, water penetrates into the interior from the surface of the field-piled deposit. Therefore, there is a problem that it is impossible to prevent an increase in moisture content due to a long period of rain.

### Citation List

### Patent Document

Patent Document 1: Japanese Patent No. 5861535
Patent Document 2: Japanese Examined Patent Application Publication No. H06-62971

### DISCLOSURE OF THE INVENTION

### Problems to be Solved by the Invention

The present invention has been made in consideration of the above circumstances, and an object thereof is to provide a water-repelling/dust-proofing agent that can improve water impermeability as compared with a related-art dust-proofing agent and can prevent water penetration for a long time, an ionic wax-based emulsion for a water-repelling/dust-proofing agent, a production method for a water-repelling/dust-proofing agent, and a method for preventing dust emission and moisture increase of a field-piled deposit.

### Means for Solving the Problems

The present inventors have intensively studied to solve the above problems. As a result, the present inventors have found that by adding an ionic wax-based emulsion that uses an ionic emulsifier as an emulsifier to a dust-proofing agent, water impermeability of the dust-proofing agent can be improved as compared with a related-art treatment, water penetration can be prevented for a long time, and an increase in moisture content can be prevented, and have completed the present invention. Specifically, the present invention provides the following aspects.

(1) A first aspect of the present invention is a water-repelling/dust-proofing agent including: an ionic wax-based emulsion containing a wax-based component that is a water-repelling component and is emulsified with an ionic emulsifier; and a resin emulsion containing a dust-proofing component and having a property such that the resin emulsion is capable of being emulsified with the ionic wax-based emulsion.
(2) A second aspect of the present invention is the water-repelling/dust-proofing agent as described in aspect (1), in which the ionic wax-based emulsion is contained in an amount of 5 parts by weight or more with respect to 100 parts by weight of the resin emulsion.
(3) A third aspect of the present invention is the water-repelling/dust-proofing agent as described in aspect (1) or (2), in which the wax-based component is at least one selected from paraffin wax, microcrystalline wax, polyethylene wax, or petrolatum.
(4) A fourth aspect of the present invention is the water-repelling/dust-proofing agent as described in any one of aspects (1) to (3), in which the ionic emulsifier is an anionic emulsifier or a cationic emulsifier.
(5) A fifth aspect of the present invention is the water-repelling/dust-proofing agent as described in aspect (4), in which the anionic emulsifier is a carboxylate salt type emulsifier, a sulfonate salt type emulsifier, a sulfate ester salt type emulsifier, a phosphate ester salt type emulsifier, or an acyl-N-methyl taurine salt type emulsifier.
(6) A sixth aspect of the present invention is the water-repelling/dust-proofing agent as described in aspect (4), in which the cationic emulsifier is an amine salt type emulsifier or a quaternary ammonium salt type emulsifier.
(7) A seventh aspect of the present invention is the water-repelling/dust-proofing agent as described in any one of aspects (1) to (6), in which a resin of the resin emulsion is at least one selected from a vinyl acetate-based resin, an acrylic resin, an acrylic copolymer resin, a synthetic rubber, a urethane resin, or asphalt.
(8) An eighth aspect of the present invention is the water-repelling/dust-proofing agent as described in aspect (7), in which the resin of the resin emulsion is at least one selected from a vinyl acetate-butyl acetate-acrylic acid ester copolymer or a vinyl acetate-acrylic acid ester copolymer.
(9) A ninth aspect of the present invention is an ionic wax-based emulsion for a water-repelling/dust-proofing agent, the ionic wax-based emulsion including: a wax-based component; and an ionic emulsifier, the wax-based component being emulsified with the ionic emulsifier.
(10) A tenth aspect of the present invention is a production method for a water-repelling/dust-proofing agent, the production method including: a step of preparing an ionic wax-based emulsion by dispersing a wax-based component as a water-repelling component in water and then adding an ionic emulsifier for emulsification; and a step of mixing the ionic wax-based emulsion and a resin emulsion containing a dust-proofing component and having a property such that the resin emulsion is capable of being emulsified with the ionic wax-based emulsion for emulsification.
(11) An eleventh aspect of the present invention is a method for preventing dust emission and moisture increase of a field-piled deposit, the method including: a step of obtaining a spray liquid by diluting the water-repelling/dust-proofing agent as described in any one of aspects (1) to (8) with water to a solid content concentration of 2% by weight or more and 5% by weight or less; a step of spraying the spray liquid onto the field-piled deposit in a liquid amount of 1 L/m² or more and 5 L/m² or less per surface area of the field-piled deposit; and a step of forming a water-repelling/dust-proofing film on a surface of the field-piled deposit by drying the sprayed spray liquid.

### Effects of the Invention

According to the present invention, it is possible to increase a duration of water impermeability and to prevent an increase in moisture content of a field-piled powder.

### PREFERRED MODE FOR CARRYING OUT THE INVENTION

Hereinafter, a specific embodiment of the present invention will be described in detail. The present invention is not limited to the following embodiment, and can be implemented with appropriate modifications within the scope of the purpose of the present invention.

### <Field-Piled Deposit>

In the present invention, a field-piled deposit to be treated refers to coal, ore, coke, slag, dust, wood chips, paper sludge, or the like piled up in an outdoor storage yard.

### <Ionic Wax-Based Emulsion>

An ionic wax-based emulsion of the present invention is an ionic wax-based emulsion suitable for use in the production of a so-called water-repelling/dust-proofing agent which is a dust-proofing agent having excellent water repellency. The ionic wax-based emulsion contains a wax-based component and an ionic emulsifier and is obtained by emulsifying the wax-based component with the ionic emulsifier, and more specifically, the wax-based component as a water-repelling component is present in a state of being dispersed in an aqueous solution together with the ionic emulsifier.

### <Wax-Based Component>

The wax-based component is not particularly limited as long as the wax-based component is wax exhibiting water repellency, and examples thereof include paraffin wax, microcrystalline wax, polyethylene wax, and petrolatum.

### <Ionic Emulsifier>

The ionic emulsifier constituting the ionic wax-based emulsion is not particularly limited as long as the ionic emulsifier is an anionic emulsifier and/or a cationic emulsifier. The present inventors have conducted a study for imparting a property (water impermeability) of preventing water such as rainwater from penetrating into an inside of a field-piled deposit while preventing dust emission of the field-piled deposit, thereby preventing a water content (moisture) in the field-piled deposit from increasing. First, a water-repelling/dust-proofing agent produced by mixing a resin emulsion containing a dust-proofing component with a nonionic wax-based emulsion prepared by emulsifying a wax-based component as a water-repelling component with a nonionic emulsifier for emulsification was sprayed on a field-piled deposit of coal and dried, and then the field-piled deposit was exposed to artificial rainfall having a rainfall intensity of 50 mm/h for 5 hours or more. As a result, water penetrated from a surface to an inside of the field-piled deposit, a water content in the field-piled deposit increased, and sufficient water repellency was not obtained. Next, a water-repelling/dust-proofing agent containing an ionic wax-based emulsion prepared using an ionic emulsifier of an anionic emulsifier or a cationic emulsifier, instead of a nonionic emulsifier, and a resin emulsion containing a dust-proofing component was sprayed on a field-piled deposit and dried, and then the field-piled deposit was exposed to artificial rainfall having a rainfall intensity of 50 mm/h for 5 hours or more. As a result, it was surprisingly found that a water-repelling/dust-proofing film that significantly improves water impermeability while preventing dust emission was formed on a surface of the field-piled deposit, thereby preventing water from penetrating from the surface to an inside of the field-piled deposit, significantly preventing an increase in water content in the field-piled deposit, and achieving excellent water repellency. Therefore, the water-repelling/dust-proofing agent of the present invention needs to contain an ionic emulsifier, more specifically, an anionic emulsifier or a cationic emulsifier as an emulsifier for emulsifying a wax-based component as a water-repelling component. Examples of the anionic emulsifier include a carboxylate salt type emulsifier, a sulfonate salt type emulsifier, a sulfate ester salt type emulsifier, a phosphate ester salt type emulsifier such as a higher alcohol and an ethylene oxide adduct thereof, and an acyl-N-methyl taurine salt type emulsifier. Examples of the cationic emulsifier include an amine salt type emulsifier and a quaternary ammonium salt type emulsifier.

As the ionic emulsifier, the anionic emulsifier has a higher emulsifying ability for the wax-based component than the cationic emulsifier, and can emulsify the wax-based component with a relatively small amount, so that the anionic emulsifier is preferred.

A content of the wax-based component in the ionic wax-based emulsion is not particularly limited, and is preferably 30% by weight or more and 50% by weight or less in terms of solid content concentration. A content of the ionic emulsifier in the ionic wax-based emulsion is not particularly limited because even a small amount of the ionic emulsifier can emulsify the wax-based component, and is preferably 2% by weight or more and 5% by weight or less in terms of solid content concentration.

A content of the ionic wax-based emulsion with respect to an emulsion resin is not particularly limited because a water-repelling effect can be expected when a small amount of the ionic wax-based emulsion is contained, and is preferably 5 parts by weight or more, more preferably 7 parts by weight or more, and most preferably 9 parts by weight or more with respect to 100 parts by weight of the resin emulsion. An upper limit of the content of the ionic wax-based emulsion is not particularly limited, and is preferably 50 parts by weight or less, more preferably 30 parts by weight or less, and most preferably 15 parts by weight or less. This is because when the content of the ionic wax-based emulsion is less than 5 parts by weight, the water-repelling effect may be insufficient, and when the content of the ionic wax-based emulsion is more than 50 parts by weight, it may have a negative effect on the formation of a binding layer such as adhesiveness and film formability of the resin emulsion.

As a production method for the ionic wax-based emulsion, a known method may be used as long as the method contains the wax-based component and the ionic emulsifier, and can emulsify the wax-based component with the ionic emulsifier. For example, there is a method of preparing an ionic wax-based emulsion by dispersing a wax-based component as a water-repelling component in water and then adding an ionic emulsifier for emulsification.

### <Water-Repelling/Dust-Proofing Agent>

The water-repelling/dust-proofing agent of the present invention includes an ionic wax-based emulsion containing a wax-based component that is a water-repelling component and is emulsified with an ionic emulsifier, and a resin emulsion containing a dust-proofing component and having a property such that the resin emulsion is capable of being emulsified with the ionic wax-based emulsion.

### <Resin Emulsion>

The resin emulsion is not particularly limited as long as the resin emulsion contains a dust-proofing component and has a property such that the resin emulsion is capable of being emulsified with an ionic wax-based emulsion. The term "capable of being emulsified" as used herein means that the wax-based emulsion and the resin emulsion are mixed together and maintained in an emulsion state without separation. The emulsion resin capable of being emulsified preferably includes, for example, at least one selected from a vinyl acetate-based resin, an acrylic resin, an acrylic copolymer resin, a synthetic rubber, a urethane resin, or asphalt.

It is more preferable that the emulsion resin particularly includes at least one selected from a vinyl acetate-butyl acetate-acrylic acid ester copolymer or a vinyl acetate-acrylic acid ester copolymer, from the viewpoint of facilitating formation of the binding layer such as excellent adhesiveness to the field-piled deposit and film formability, as a dust-proofing component.

### <Production Method for Water-Repelling/Dust-Proofing Agent>

A production method for a water-repelling/dust-proofing agent includes a step of preparing an ionic wax-based emulsion by dispersing a wax-based component as a water-repelling component in water and then adding an ionic emulsifier for emulsification, and a step of mixing the ionic wax-based emulsion and a resin emulsion containing a dust-proofing component and having a property such that the resin emulsion is capable of being emulsified with the ionic wax-based emulsion for emulsification. As a method of dispersing and emulsifying, a known method may be used.

### <Method for Preventing Dust Emission and Moisture Increase in Field-Piled Deposit>

A method for preventing dust emission and moisture increase of a field-piled deposit includes a step of obtaining a spray liquid by diluting the water-repelling/dust-proofing agent of the present invention with water to a solid content concentration of 2% by weight or more and 5% by weight or less, a step of spraying the spray liquid onto the field-piled deposit in a liquid amount of 1 L/m² or more and 5 L/m² or less per surface area of the field-piled deposit, and a step of forming a water-repelling/dust-proofing film on a surface of the field-piled deposit by drying the sprayed spray liquid.

### <Spray Liquid>

The spray liquid can be prepared by a known method as long as the spray liquid can be adjusted to a solid content concentration of 2% by weight or more and 5% by weight or less by diluting the water-repelling/dust-proofing agent with water. When the solid content concentration is lower than 2% by weight, the water-repelling/dust-proofing agent cannot be sprayed uniformly, and a spray amount increases. When the solid content concentration is higher than 5% by weight, a viscosity of the dispersion liquid is too high, and a load is applied to a pump and a nozzle, which is not preferred.

### <Spraying Method>

A method for spraying the water-repelling/dust-proofing agent of the present invention on a field-piled deposit is not particularly limited, and the water-repelling/dust-proofing agent is sprayed from a sprinkler truck toward the deposit or sprayed from a stacker for field-piled, and the spraying is performed by selecting an appropriate pump or nozzle each time.

A spray amount is appropriately determined according to the used water-repelling/dust-proofing agent and a degree of dust or moisture increase prevention required for the field-piled deposit, and it is preferable to spray the water-repelling/dust-proofing agent described above in an amount of about 1 L/m² to 5 L/m² per the surface area of the field-piled deposit.

Thereafter, the sprayed spray liquid is dried to form a water-repelling/dust-proofing film on the surface of the field-piled deposit. A drying method is not particularly limited, and may be natural drying, for example.

A coating film formed in this way is a strong film having a large film thickness, and thus has a high dust prevention effect. In addition, cracks are less likely to occur, and a water-repelling component is also contained, and thus moisture is less likely to penetrate, and a moisture increase prevention effect is also excellent. As a result, it is also effective in preventing coal drift.

### EXAMPLES

Although the present invention will be more specifically described below by showing Examples, the present invention is not limited to Examples below.

### [Examples 1 to 6 and Comparative Examples 1 to 5]

In Examples 1 to 6, a mixture of a resin emulsion and an ionic wax-based emulsion at a ratio of 100:5 or 100:10 (solid content weight ratio) was used as a water-repelling/dust-proofing agent to be used (solid content concentration: 4% by weight). In Comparative Examples 1 and 4, no wax-based emulsion was used. In Comparative Examples 2, 3, and 5, a nonionic wax-based emulsion was used instead of an ionic wax-based emulsion. These mixtures were used to evaluate water impermeability and a coal moisture content.

### [Examples 7 to 10 and Comparative Examples 6 to 10]

In Examples 7 to 10, a mixture of a resin emulsion and an ionic wax-based emulsion at a ratio of 100:10 (solid content weight ratio) was used as a water-repelling/dust-proofing agent to be used (solid content concentration: 4% by weight), so as to evaluate a dust-proofing property. In Comparative Example 6, a dust-proofing property was evaluated without using a resin emulsion and an ionic wax-based emulsion. In Comparative Examples 7 and 8, a dust-proofing property was evaluated using a resin emulsion alone, without using an ionic wax-based emulsion. In Comparative Examples 9 and 10, a dust-proofing property was evaluated using an ionic wax-based emulsion alone, without using a resin emulsion.

The following resin emulsions were used.
· Vinyl acetate-butyl acetate-acrylic acid ester copolymer emulsion
   Main component: vinyl acetate-butyl acetate-2-ethylhexyl acrylate copolymer
   Solid content concentration: 35%
   Viscosity: 10 mPa·s or more and 400 mPa·s or less
   pH: 5.0 or more and 7.0 or less
· Vinyl acetate-acrylic acid ester copolymer emulsion
   Main component: vinyl acetate-acrylic acid ester copolymer
   Solid content concentration: 35%
   Viscosity: 100 mPa·s or more and 1100 mPa·s or less
   pH: 6.0 or more and 8.0 or less

### <Preparation of Ionic Wax-Based Emulsion>

· Wax: 700 g
· Ionic emulsifier: 100 g
The above were melted and stirred at 90°C, and 1.2 kg of water at 90°C was gradually added to emulsify. After cooling, water was added to adjust a concentration to obtain an emulsion having a solid content of 40% by weight. The emulsion had a viscosity of 14 cp (30°C) and was stable at room temperature for one year or longer.

### <Evaluation of Water Impermeability>

In order to evaluate the water impermeability of a field-piled coal, the coal was packed in a petri dish (inner diameter: 85 mm, height: 20 mm) and leveled to make a flat surface. The water-repelling/dust-proofing agent containing the emulsion resin solution as a dust-proofing agent and the mixed solution of the emulsion resin and the water-repelling agent shown in Tables 1 and 2 was sprayed onto the coal with a sprayer at 2 L/m² per area of the coal surface, and the coal was left to stand for one week indoors to form a film. Thereafter, 1 mL of water droplets were dropped onto the coal surface at three locations using a pipette. In order to prevent the water droplets from being evaporated and lost, a transparent lid was used to cover the coal, and a time until all the water droplets had penetrated the coal and could not be visually confirmed was measured as a penetration time. Results are shown in Tables 1 and 2. A main component of the ionic wax-based emulsion used in the test is shown in Table 3.

### <Evaluation of Coal Moisture Content>

In order to simulate an inclined surface of a field-piled coal, a cylindrical container with an inclined surface (inner diameter: 75 mm, lower inclined surface height: 83 mm, upper inclined surface height: 140 mm, angle of repose: about 37°) obtained by obliquely cutting a cylinder was prepared. A net of about 30 mesh was provided at a lower part of the container to prevent coal from flowing away. Coal was packed in the cylindrical container with the inclined surface that simulates the inclined surface of the field-piled coal, and the water-repelling/dust-proofing agent containing the emulsion resin solution as a dust-proofing agent and the mixed solution of the emulsion resin and the water-repelling agent shown in Tables 4 and 5 was sprayed onto the inclined surface of the coal with a sprayer at 2 L/m² per area of the coal surface, and the coal was left to stand for one week indoors to form a film. Thereafter, the cylindrical container was placed in an artificial rainfall apparatus. The used artificial rainfall apparatus is an apparatus that drops water droplets from a needle installed on a ceiling and can reproduce uniform rainfall. In this test, a test time was set to 7 hours at a rainfall amount of 50 mm/hr, a moisture content of the coal after the test was measured by a weight change of the cylindrical container with the inclined surface, and a difference between the moisture content after rainfall and the moisture content before rainfall was compared. Results are shown in Tables 4 and 5. A main component of the ionic wax-based emulsion used in the test is shown in Table 3.

### <Evaluation of Dust-Proofing Property>

In order to evaluate the water impermeability of a field-piled coal, the coal was packed in a petri dish (inner diameter: 85 mm, height: 20 mm) and leveled to make a flat surface. The water-repelling/dust-proofing agent containing the emulsion resin solution as a dust-proofing agent and the mixed solution of the emulsion resin and the water-repelling agent shown in Table 6 was sprayed onto the coal with a sprayer at 2 L/m² per area of the coal surface, and the coal was left to stand for one week indoors to form a film. After one week, the sample weight before air blowing was measured, and the sample weight was measured after air blowing for 5 minutes using an air blower under a wind speed condition of 10 m/s. A scattering rate was calculated based on the sample weights before and after the air blowing by the following equation. ·
Scattering rate (%) = (weight before air blowing - weight after air blowing)/weight before air blowing × 100
Results are shown in Table 6. A main component of the ionic wax-based emulsion used in the test is shown in Table 3.

In the above evaluation methods, the phenomenon of the dust emission and the moisture content increase in the actual field-piled deposit was reproduced in a laboratory, and the results here have been proven to be effective in the actual field-piled deposit.

**[Table 1]**

| Regarding vinyl acetate-butyl acetate-acrylic acid ester copolymer | | | | | |
|---|---|---|---|---|---|
| | Emulsion resin | Wax-based emulsion (water-repelling agent) | Emulsion resin: water-repelling agent (solid content weight ratio) | Solid content concentration (% by weight) | Penetration time (h) |
| Example 1 | Vinyl acetate-butyl acetate-acrylic acid ester copolymer | Anionic | 100: 10 | 4 | 76-77 |
| Example 2 | Vinyl acetate-butyl acetate-acrylic acid ester copolymer | Anionic | 100 : 5 | 4 | 24-25 |
| Example 3 | Vinyl acetate-butyl acetate-acrylic acid ester copolymer | Cationic | 100: 10 | 4 | 30-31 |
| Example 4 | Vinyl acetate-butyl acetate-acrylic acid ester copolymer | Cationic | 100 : 5 | 4 | 14-15 |
| Comparative Example 1 | Vinyl acetate-butyl acetate-acrylic acid ester copolymer | - | - | 4 | 5-6 |
| Comparative Example 2 | Vinyl acetate-butyl acetate-acrylic acid ester copolymer | Nonionic | 100: 10 | 4 | 10-11 |
| Comparative Example 3 | Vinyl acetate-butyl acetate-acrylic acid ester copolymer | Nonionic | 100 : 5 | 4 | 7-8 |

**[Table 2]**

| Regarding vinyl acetate-acrylic acid ester copolymer | | | | | |
|---|---|---|---|---|---|
| | Emulsion resin | Wax-based emulsion (water-repelling agent) | Emulsion resin: water-repelling agent (solid content weight ratio) | Solid content concentration (% by weight) | Penetration time (h) |
| Example 5 | Vinyl acetate-acrylic acid ester copolymer | Anionic | 100: 10 | 4 | 26-27 |
| Example 6 | Vinyl acetate-acrylic acid ester copolymer | Cationic | 100 : 10 | 4 | 25-26 |
| Comparative Example 4 | Vinyl acetate-acrylic acid ester copolymer | - | - | 4 | 0-1 |
| Comparative Example 5 | Vinyl acetate-acrylic acid ester copolymer | Nonionic | 100 : 10 | 4 | 8-9 |

**[Table 3]**

| Main composition of water-repelling agent | | |
|---|---|---|
| water-repelling agent | Main Component | Emulsifier |
| Anionic wax-based emulsion | Paraffin wax | C16-22 fatty acid |
| Cationic wax-based emulsion | Paraffin wax / petrolatum | Alkylamine acetate |
| Nonionic wax-based emulsion | Paraffin wax | Polyoxyethylene / sorbitan fatty acid ester |

**[Table 4]**

| Regarding vinyl acetate-butyl acetate-acrylic acid ester copolymer | | | | | |
|---|---|---|---|---|---|
| | Emulsion resin | Wax-based emulsion (water-repelling agent) | Emulsion resin: water-repelling agent (solid content weight ratio) | Solid content concentration (% by weight) | Difference between moisture content after rainfall and moisture content before rainfall (% by weight) |
| Example 1 | Vinyl acetate-butyl acetate-acrylic acid ester copolymer | Anionic | 100: 10 | 4 | 0.6 |
| Example 3 | Vinyl acetate-butyl acetate-acrylic acid ester copolymer | Cationic | 100 : 10 | 4 | 2.9 |
| Comparative Example 1 | Vinyl acetate-butyl acetate-acrylic acid ester copolymer | - | - | 4 | 4.8 |
| Comparative Example 2 | Vinyl acetate-butyl acetate-acrylic acid ester copolymer | Nonionic | 100 : 10 | 4 | 4.4 |

**[Table 5]**

| Regarding vinyl acetate-acrylic acid ester copolymer | | | | | |
|---|---|---|---|---|---|
| | Emulsion resin | Wax-based emulsion (water-repelling agent) | Emulsion resin: water-repelling agent (solid content weight ratio) | Solid content concentration (% by weight) | Difference between moisture content after rainfall and moisture content before rainfall (% by weight) |
| Example 5 | Vinyl acetate-acrylic acid ester copolymer | Anionic | 100: 10 | 4 | 2.8 |
| Example 6 | Vinyl acetate-acrylic acid ester copolymer | Cationic | 100: 10 | 4 | 3.1 |
| Comparative Example 4 | Vinyl acetate-acrylic acid ester copolymer | - | - | 4 | 24.1 |
| Comparative Example 5 | Vinyl acetate-acrylic acid ester copolymer | Nonionic | 100: 10 | 4 | 4.7 |

**[Table 6]**

| | Emulsion resin | Wax-based emulsion (water-repelling agent) | Emulsion resin: water-repelling agent (solid content weight ratio) | Solid content concentration (% by weight) | Scattering rate (%) |
|---|---|---|---|---|---|
| Example 7 | Vinyl acetate-butyl acetate-acrylic acid ester copolymer | Anionic | 100: 10 | 4 | 0.1 |
| Example 8 | Vinyl acetate-butyl acetate-acrylic acid ester copolymer | Cationic | 100 : 10 | 4 | 0.2 |
| Example 9 | Vinyl acetate-acrylic acid ester copolymer | Anionic | 100: 10 | 4 | 0.1 |
| Example 10 | Vinyl acetate-acrylic acid ester copolymer | Cationic | 100 : 10 | 4 | 0.1 |
| Comparative Example 6 | - | - | - | - | 80 |
| Comparative Example 7 | Vinyl acetate-butyl acetate-acrylic acid ester copolymer | - | - | 4 | 0.2 |
| Comparative Example 8 | Vinyl acetate-acrylic acid ester copolymer | - | - | 4 | 0.1 |
| Comparative Example 9 | - | Anionic | - | 0.4 | 81 |
| Comparative Example 10 | - | Cationic | - | 0.4 | 80 |

It was clear that the water penetration time of the coal treated with the combination of the ionic wax-based emulsion and the resin emulsion (Examples 1 to 6 in Tables 1 and 2) was significantly improved as compared with the coal not treated with the combination of the ionic wax-based emulsion and the resin emulsion (Comparative Examples 1 to 5 in Tables 1 and 2). In addition, the difference between the moisture content after rainfall and the moisture content before rainfall of the coal treated with the combination of the ionic wax-based emulsion and the resin emulsion (Examples 1, 3, 5, and 6 in Tables 4 and 5) was significantly improved as compared with the difference between the moisture content after rainfall and the moisture content before rainfall of the coal treated with the combination of the nonionic wax-based emulsion and the resin emulsion instead of the ionic wax-based emulsion (Comparative Examples 2 and 5 in Tables 4 and 5). In particular, when the anionic emulsifier was used as the ionic wax-based emulsion, the effect was remarkable (Examples 1, 2, and 5 in Tables 1, 2, 4, and 5). It is considered that the emulsification of the wax component with the ionic emulsifier in advance is more effective in improving the water penetration time of the coal or the like. This is because when the wax component is emulsified with the ionic emulsifier, it can be expected that the wax component is more uniformly dispersed in the dust-proofing agent than when the wax component and the ionic emulsifier are mixed in the resin emulsion. In addition, with respect to the dust-proofing property, as compared with Comparative Examples 7 and 8 (scattering rate: 0.1% or more and 0.2% or less) in which only the ionic wax-based emulsion was added, Examples 7 to 10 (scattering rate: 0.1% or more and 0.2% or less) in which the cationic wax-based emulsion was added as a water-repelling agent to the dust-proofing agent also exhibited the same performance as Comparative Examples 7 and 8 in which only the resin emulsion was added without adding a water-repelling agent. It was clear that Comparative Example 6 (scattering rate: 80%) in which no resin emulsion and ionic wax-based emulsion was added and Comparative Examples 9 and 10 (scattering rate: 80% or more and 81% or less) in which only the ionic wax-based emulsion was added without adding the resin emulsion did not show any dust-proofing effect. From the above, it is clear that even when the ionic wax-based emulsion is used in combination with the resin emulsion, the dust-proofing performance is equivalent to that of the resin emulsion used as a related-art dust-proofing agent. Therefore, the water-repelling/dust-proofing agent of the present invention has an effect of improving water impermeability as compared with the related-art dust-proofing agent without deteriorating the dust-proofing performance and preventing water penetration for a long time.

The present invention has an effect that a water penetration time of the coal treated with the combination of the ionic wax-based emulsion and the dust-proofing agent is at least 20 hours longer than when treated with the resin emulsion alone, and a water penetration time of the coal treated with the combination of the ionic wax-based emulsion and the resin emulsion is at least 15 hours longer than when treated with the combination of the nonionic wax-based emulsion and the resin emulsion, without deteriorating a dust-proofing performance. In addition, when treated with the resin emulsion alone, the difference between the coal moisture content after rainfall and the coal moisture content before rainfall was 4.8 or more and 24.1 or less, but when treated with the combination of the ionic wax-based emulsion and the dust-proofing agent, the difference was 0.6 or more and 3.1 or less, and the increase in the moisture content was prevented. When treated with the combination of the resin emulsion and the nonionic wax-based emulsion, the difference between the coal moisture content after rainfall and the coal moisture content before rainfall was 4.4 or more and 4.7 or less, but when treated with the combination of the resin emulsion and the ionic wax-based emulsion, the difference was 0.6 or more and 3.1 or less, and the effect of preventing the increase in the moisture content is also exhibited.

## Claims

1. A water-repelling/dust-proofing agent comprising:
an ionic wax-based emulsion containing a wax-based component that is a water-repelling component and is emulsified with an ionic emulsifier; and
a resin emulsion containing a dust-proofing component and having a property such that the resin emulsion is capable of being emulsified with the ionic wax-based emulsion.

2. The water-repelling/dust-proofing agent according to claim 1, wherein the ionic wax-based emulsion is contained in an amount of 5 parts by weight or more with respect to 100 parts by weight of the resin emulsion.

3. The water-repelling/dust-proofing agent according to claim 1, wherein the wax-based component is at least one selected from paraffin wax, microcrystalline wax, polyethylene wax, or petrolatum.

4. The water-repelling/dust-proofing agent according to claim 1, wherein the ionic emulsifier is an anionic emulsifier or a cationic emulsifier.

5. The water-repelling/dust-proofing agent according to claim **4,** wherein the anionic emulsifier is a carboxylate salt type emulsifier, a sulfonate salt type emulsifier, a sulfate ester salt type emulsifier, a phosphate ester salt type emulsifier, or an acyl-N-methyl taurine salt type emulsifier.

6. The water-repelling/dust-proofing agent according to claim **4,** wherein the cationic emulsifier is an amine salt type emulsifier or a quaternary ammonium salt type emulsifier.

7. The water-repelling/dust-proofing agent according to claim 1, wherein a resin of the resin emulsion is at least one selected from a vinyl acetate-based resin, an acrylic resin, an acrylic copolymer resin, a synthetic rubber, a urethane resin, or asphalt.

8. The water-repelling/dust-proofing agent according to claim 7, wherein the resin of the resin emulsion is at least one selected from a vinyl acetate-butyl acetate-acrylic acid ester copolymer or a vinyl acetate-acrylic acid ester copolymer.

9. An ionic wax-based emulsion for a water-repelling/dust-proofing agent, the ionic wax-based emulsion comprising: a wax-based component; and an ionic emulsifier, the wax-based component being emulsified with the ionic emulsifier.

10. A production method for a water-repelling/dust-proofing agent, the production method comprising:
a step of preparing an ionic wax-based emulsion by dispersing a wax-based component as a water-repelling component in water and then adding an ionic emulsifier for emulsification; and
a step of mixing the ionic wax-based emulsion and a resin emulsion containing a dust-proofing component and having a property such that the resin emulsion is capable of being emulsified with the ionic wax-based emulsion for emulsification.

11. A method for preventing dust emission and moisture increase of a field-piled deposit, the method comprising:
a step of obtaining a spray liquid by diluting the water-repelling/dust-proofing agent according to claim 1 with water to a solid content concentration of 2% by weight or more and 5% by weight or less;
a step of spraying the spray liquid onto the field-piled deposit in a liquid amount of 1 L/m² or more and 5 L/m² or less per surface area of the field-piled deposit; and
a step of forming a water-repelling/dust-proofing film on a surface of the field-piled deposit by drying the sprayed spray liquid.
